# EUROPÄISCHE PATENTANMELDUNG

(11) **EP 2 407 641 A1**
(43) Veröffentlichungstag der Anmeldung: **18.01.2012**
(21) Anmeldenummer: 10007222.2
(22) Anmeldetag: 13.07.2010
(51) Int. Cl.: F01D 11/00

(54) **Dichtelement zur Dichtung eines Spalts sowie Dichtungsanordnung**

(71) Anmelder: Siemens Aktiengesellschaft, 80333 München (DE)
(72) Erfinder: Milazar, Mirko, 46049 Oberhausen (DE)

(57) **Zusammenfassung**

Die Erfindung betrifft im Wesentlichen ein Dichtelement (1) zur Dichtung eines Spaltes (5) zwischen zwei Bauteilen (2a,2b), insbesondere einer Dichtungsanordnung (2c) einer Gasturbinenanlage, wobei das Dichtelement (1) entlang einer Hauptlinie (21) gestreckt ist und einen konturierten Querschnitt in einem geriffelten Mittelbereich (10) hat. Im Querschnitt ist das Dichtelement (1) entlang der Hauptlinie (21) gerichtet und in einer Richtung im Wesentlichen orthogonal zur Hauptlinie (21) deformierbar. Um ein verschleißbeständiges, langlebiges Dichtelement (1) mit einer besonders effizienten Sperrwirkung bereitzustellen, wird vorgeschlagen, dass die Dichtungszähne (20) der Riffelung eine nahezu rechteckige Querschnittkontur aufweisen und deren Zahnhöhe (H) zwischen 10% und 40% der zur Zahnhöhe (H) parallel erfassbaren Dichtelementdicke (D) beträgt.

## Beschreibung

Die Erfindung betrifft ein Dichtelement zur Dichtung eines Spalts, welcher zwischen zwei thermisch gegeneinander beweglichen Bauteilen mit einer jeweiligen einander gegenüberliegenden Bauteilnut gebildet ist. Ferner betrifft die Erfindung eine derartige Dichtungsanordnung mit einem in den einander gegenüberliegenden Bauteilnuten sitzenden Dichtelement.

In Gasturbinen begrenzen beispielsweise auch Plattformen von Turbinenleitschaufeln den ringförmigen Strömungsweg des das in den Brennkammern der Gasturbine erzeugten Heißgases. Die Plattformen benachbarter Turbinenschaufeln sind dabei spaltbildend nebeneinander angeordnet. Um einen Verlust von Heißgas durch diese Spalte zu verhindern und gleichzeitig damit die Beschädigung von rückseitig angeordneten Trägerbauteilen zu vermeiden, ist es bekannt, die Spalte mit Hilfe eines Dichtelements abzudichten, welches in zwei einander gegenüberliegenden Bauteilnuten sitzt. Eine derartige Dichtungsanordnung ist aus der EP 0 852 659 B1 bekannt. Das daraus bekannte plattenförmige Dichtblech weist an einer Seite eine gezahnte (geriffelte) Oberfläche auf.

Es hat sich gezeigt, dass die so ausgeführten Dichtbleche z.B. bei thermisch gegeneinander stark beweglichen Bauteilen starken Verschleiß erleiden können. Demnach kann die erforderliche Dichtblechfunktion beeinträchtigt und die Betriebstüchtigkeit des Systems deutlich eingeschränkt werden. Weiter können auch Probleme bei der Montage der bekannten Dichtbleche auftreten, die zu einer unerwünschten Nachbearbeitung führen können.

Aufgabe der Erfindung ist es daher, ein langlebiges Dichtelement zur Dichtung eines Spalts anzugeben, welches eine wirksame Dichtung auch bei vergleichsweise großen wärmebedingten Bauteilbewegungen gewährleistet. Eine weitere Aufgabe liegt in der Angabe einer Dichtungsanordnung einer Gasturbinenanlage, bei der ein heißgasführender Bereich von einem Kühlfluid, insbesondere Kühlluft, besonders wirksam abgedichtet ist.

Erfindungsgemäß wird die erstgenannte Aufgabe durch ein Dichtelement zur Dichtung eines Spalts zwischen zwei thermisch gegeneinander beweglichen Bauteilen, welche jeweils eine einander gegenüberliegende Bauteilnut zur Aufnahme des Dichtelements aufweisen, welches entlang einer Hauptlinie gerichtet ist und in einem im Wesentlichen zur Hauptlinie senkrechten Querschnitt einen zwischen einem ersten Ende und einem zweiten Ende angeordneten Mittelbereich mit einer ersten Oberfläche aufweist, die gezahnt ist, gelöst, indem die Dichtungszähne im Wesentlichen eine rechteckige Querschnittskontur aufweisen und deren Zahnhöhe zwischen 10% und 40% der zur Zahnhöhe parallel erfassbaren Dichtelementdicke, d.h. einschließlich der Zahnhöhe beträgt.

Die Erfindung geht von der Erkenntnis aus, dass das bekannte Dichtblech eine Zahnung aufweist, dessen Zahnhöhe im Verhältnis zur Gesamtdicke des Dichtblechs zu groß war. Der Zahnträgerabschnitt des Dichtblechs, an dem die Dichtungszähne angeordnet sind, wies somit eine nur unzureichende Materialdicke auf, so dass Verschleiß den bisher relativ dünnen Zahnträgerabschnitt der Dichtbleche unzulässig stark schwächen konnte. Insofern verblieb bei erhöhter mechanischer Beanspruchung aufgrund vergleichsweise großen Verschiebungen der einander gegenüberliegenden Bauteile nur vergleichsweise wenig Abriebmaterial im Zahnträgerabschnitt des Dichtblechs. Aufgrund des vergleichsweise dünnen Zahnträgerabschnitts konnte bei entsprechenden thermischen Bewegungen der Bauteile dieser lokal vorzeitig verschleißen. Dies konnte zu einem Teilversagen des bekannten Dichtblechs führen. Die Zahnhöhe ist in Bezug auf die gesamte Dichtelementdicke nunmehr erfindungsgemäß begrenzt und zwischen beträgt 15% und 40% der Dichtelementdicke. Dadurch ist der Zahnträgerabschnitt des erfindungsgemäßen Dichtelements wesentlich dicker als beim bisherigen Dichtblech ausgebildet, was zu einer gesteigerten Langzeitfestigkeit und Lebensdauer des Dichtelements führt.

Im Gegensatz zu den im Querschnitt spitz zulaufenden Dichtungszähnen des aus dem Stand der Technik bekannten Dichtelements weisen die Dichtungszähne gemäß der Erfindung eine nahezu rechteckige Querschnittkontur auf, abgesehen von einem Übergangsbereich zum Zahnträgerabschnitt. Demnach weist das erfindungsgemäße Dichtelement nunmehr Dichtungszähne auf, deren Zahnflanken steiler sind als beim nächstliegenden Stand der Technik. Auch sind die Dichtungszähne wesentlich schlanker ausgebildet als bisher. Wegen der steileren Zahnflanken und der schlankeren Ausbildung besitzt das Dichtelement eine verbesserte Verformbarkeit (Nachgiebigkeit) im Rifflebereich, was eine einfache Montage des plattenförmigen Dichtelements in den Bauteilnuten ermöglicht. Sollte dennoch Verschleiß auftreten, so tritt dieser zuerst bei den neuartigen Zähnen und danach erst im Zahnträgerabschnitt auf. Dies verzögert das Teilversagen des Dichtelements.

Somit unterscheidet sich das erfindungsgemäße Dichtelement vom bekannten Dichtblech darin, dass der Trägerabschnitt des erfindungsgemäßen Dichtelements nun steifer ist als beim bekannten Dichtblech und der Rifflebereich des erfindungsgemäßen Dichtelements weicher ist als beim bekannten Dichtelement. Insofern wurde in die steiferen und weicheren Bereiche folglich getauscht.

Weiter zeigt das Dichtelement unabhängig von seiner relativen Zahnhöhe eine verbesserte Dichtwirkung, wenn die Dichtungszähne eine rechteckige Querschnittskontur aufweisen und deren Teilungsabstand zueinander etwa auf das 1,6-fache der Zahnhöhe der Dichtungszähne verkleinert ist. Demnach wird ein optimaler Abstand zwischen den benachbarten Zähnen eingestellt und eine optimale Spaltdrosselung erreicht, so dass gegenüber der bekannten Ausführung eine verbessere Dichtwirkung sichergestellt wird.

Eine erfindungsgemäße Dichtungsanordnung zweier thermisch gegeneinander beweglichen Bauteile, die spaltbildend einander gegenüberliegen, wobei in den einander gegenüberliegenden Wänden der Bauteile jeweils eine Bauteilnut vorgesehen ist, in denen zur Dichtung des Spalts ein Dichtelement nach dem Oberbegriff des Anspruchs 1 angeordnet ist, kann darüber hinaus angegeben werden, wenn die Bauteilnuten eine Nutbreite aufweisen, welche jeweils größer ist als die dazu parallel erfassbare Dichtelementdicke und wenn der Abstand zwischen zwei einander benachbarten Dichtungszähnen des Dichtelements mindestens das 5 bis 10-fache der Differenz zwischen der maximalen Nutbreite und der minimalen Dichtelementdicke beträgt. Sofern die Differenz zwischen der maximalen Nutbreite und der minimalen Dichtelementdicke weniger als 0,05 mm beträgt, beträgt die Obergrenze des Abstands zwischen zwei einander benachbarten Zähnen das 10-fache der Differenz.

Dabei ist davon auszugehen, dass die vorgenannte Differenz gleich dem Maß des Spalts zwischen den Dichtungszahnspitzen und der diesen gegenüberliegenden Seitenwand ist, sofern die ebene Seite des Dichtelements an der Seitenwand der Bauteilnut anliegt. Damit wird selbst für den Fall, dass sich eine sehr geringfügige Leckageströmung einstellt, diese mithilfe der erfinderischen Riffelnutweite zusätzlich behindert, was die Durchströmungsmenge von Leckageluft weiter begrenzt. Die Reduzierung der Leckverluste trägt zur Steigerung der Effizienz von Gasturbinen bei.

Vorteilhafte Ausgestaltungen der Erfindung sind in den Unteransprüchen angegeben.

Gemäß einer ersten vorteilhaften Ausgestaltung der Dichtungsanordnung sind die Nutbreite und die Dichtelementdicke derart aufeinander abgestimmt, dass das Dichtelement mit einer Übergangspassung mit gezieltem Übermaß in den Bauteilnuten eingebaut ist. Einerseits wird dadurch eine vergleichsweise gute Abdichtung des Spalts zwischen den Bauteilen erreicht. Andererseits führt dies bei der Montage des Dichtelements in der Bauteilnut nicht zu einem ungewollten Lösen, solange das Dichtelement nur in einer der beiden Bauteilnuten eingesetzt ist. Weiterhin bleibt eine einfache Einbaubarkeit der Dichtelemente trotzdem gewährleistet. Eine Nachbearbeitung, wie beim Stand der Technik, kann so vorteilhafterweise vermieden werden.

Zweckmäßigerweise sind alle Nenn-Maße und Toleranzen der Abmessungen der Bauteile und des Dichtelements so gewählt, dass - unter Berücksichtigung aller Toleranzen - die Nutmindestbreite bis zu 0,05 mm kleiner ist als die dazu parallel erfassbare Dichtelement-Maximaldicke. Zudem beträgt der Abstand zwischen zueinander benachbarten Dichtungszähnen des Dichtelements das 5 bis 10-fache der Differenz zwischen maximaler Nutbreite und minimaler Dichtelementdicke. Durch diese Maßnahme wird das obere Übermaß der Übergangspassung begrenzt, was die einfache Einbaubarkeit des Dichtelements gewährleistet. Für den Fall, dass nach einiger Betriebsbeanspruchung das Dichtelement mit geringfügigem Spiel in der Bauteilnut sitzt und der Spalt zwischen den Dichtungszahnspitzen und der diesen gegenüberliegenden Seitenwand der Bauteilnut geringe Durchströmungen zulassen, ist es von Vorteil, wenn der Abstand zwischen zwei einander benachbarten Dichtungszähnen des Dichtelements das 5 bis 10-fache des zu erwartenden, maximalen Spalts beträgt. In diesem Fall können sich in den zwischen den Dichtungszähnen angeordneten Riffelnuten Strömungswirbel der Leckageströmung bilden, die eine Durchströmung des Spalts zwischen Dichtungszähnen und Nutseitenwand behindert. Dies verringert wiederum den Leckagemassenstrom.

Zweckmäßigerweise ist die maximale Nutbreite gegenüber der minimalen Dichtelementdicke inklusive Zahnhöhe maximal um das 1,1-fache der Dichtelementdicke inklusive Zahnhöhe größer. Die Dichtungszähne des Dichtelements weisen vorzugsweise eine besondere Anpassungsfähigkeit in Form einer verbesserten Verformbarkeit auf, so dass eine einfache Montage der Dichtelemente selbst bei Übermaß weiterhin gewährleistet werden kann. Diese Anpassungsfähigkeit basiert auf den steileren Zahnflanken und schmaleren Dichtungszähnen, verglichen mit denen aus dem Stand der Technik.

Außerdem weist das Dichtelement eine besondere Nachgiebigkeit bei erhöhten Versätzen und Verformungen der benachbarten Bauteile auf, so dass das Dichtelement auch zur Abdichtung von Bauteilen mit erheblichen Versätzen und Verformungen während des Betriebs besonders geeignet ist.

Die voranbeschriebene Erfindung wird anhand der nachfolgenden Figurenbeschreibung näher erläutert. Es zeigt:
- FIG 1: einen Ausschnitt eines Längsschnitts durch eine Gasturbinenanlage und
- FIG 2: den Querschnitt durch eine Dichtungsanordnung einer Gasturbinenanlage mit einem Dichtelement.

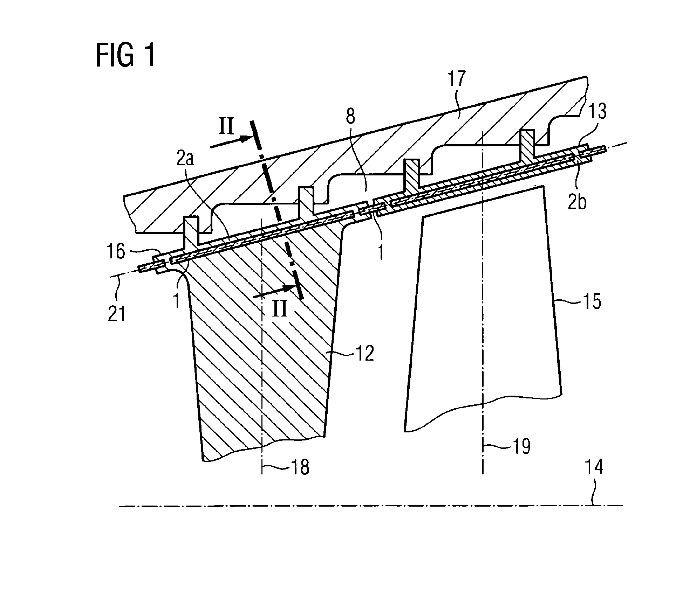

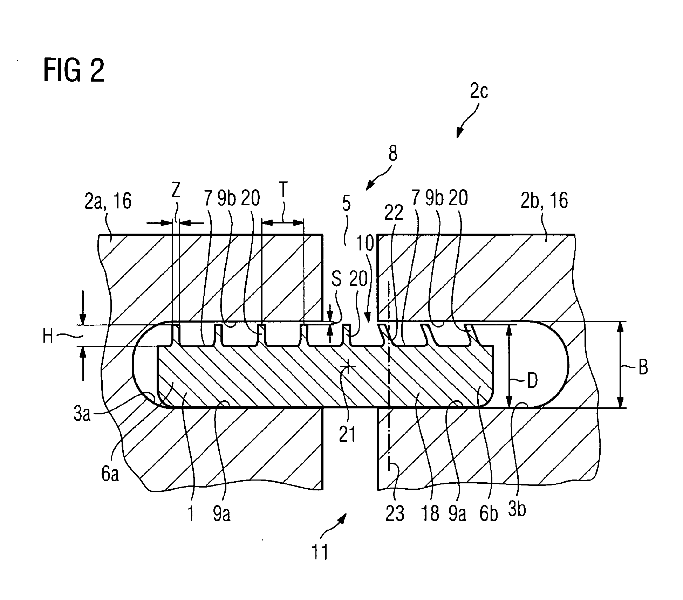

In FIG 1 ist eine entlang einer Hauptachse 14 gerichtete Gasturbinenanlage 22 dargestellt. Diese weist in einem Gehäuse 17 in axialer Richtung abwechselnd Leitschaufeln 12 und Laufschaufeln 15 auf. Die Leitschaufeln 12 sind entlang einer Achse 18 senkrecht zur Hauptachse 14 gerichtet und entlang des Umfangs der Gasturbinenanlage 22 einen Kreis bildend angeordnet. Die Leitschaufeln 12 sind über eine jeweilige Leitschaufelplatte 16 mit dem Gehäuse 17 der Gasturbinenanlage 22 verbunden. Entlang des Umfangs sind benachbarte Leitschaufeln 12 durch einen jeweiligen Spalt 5 voneinander beabstandet (s. FIG 2), wodurch diese sich weitgehend frei thermisch ausdehnen können. Die Leitschaufelplatte 16 trennt einen um die Hauptachse 14 der Gasturbinenanlage 22 gebildeten Heißgasbereich 11 von einem zwischen der Leitschaufelplatte 16 und dem Turbinengehäuse 17 gebildeten Kühlgasbereich 8. Die Laufschaufeln 15 sind entlang einer jeweiligen Hauptachse 19 gestreckt, die ebenfalls im Wesentlichen orthogonal zur Hauptachse 14 der Gasturbinenanlage stehen. Die Laufschaufeln 15 liegen vollständig in dem Heißgasbereich 11. Dieser Heißgasbereich 11 wird durch eine Mehrzahl von Wandbauteilen 13 entlang des Umfangs der Gasturbinenanlage 22 von dem Kühlluftbereich 8 getrennt. Die Wandbauteile 13 sind hierbei jeweils den Laufschaufeln 15 benachbart. Die Wandbauteile 13 sind mit dem Turbinengehäuse 17 verbunden. Der Übersichtlichkeit halber sind jeweils nur eine Leitschaufel 12, eine Laufschaufel 15 und ein Wandbauteil 13 dargestellt. In axialer Richtung ist ein jeweiliges Wandbauteil 13 von einer jeweiligen Leitschaufel 12, insbesondere der Leitschaufelplatte 16 durch einen Spalt 5 beabstandet. Dieser Spalt 5 ist durch ein Dichtelement 1 abgedichtet, wodurch weitgehend eine Strömung von Kühlgas aus dem Kühlgasbereich 8 in den Heißgasbereich 11 hinein verhindert wird. Die Leitschaufel 12 stellt hierbei ein erstes Bauteil 2a und das Wandteil 13 ein zweites Bauteil 2b dar. In Axialrichtung erfolgt somit eine Abdichtung des Kühlgasbereichs 8 von dem Heißgasbereich 11 durch Leitschaufelplatten 16 und Wandbauteilen 13 und in Umfangsrichtung jeweils eine Abdichtung zwischen benachbarten Leitschaufeln 12 und zwischen entsprechend benachbarten Wandbauteilen 13.

FIG 2 zeigt einen Schnitt entlang des Umfangs der Gasturbinenanlage 22 durch zwei benachbarte Bauteile 2a, 2b. Beide Bauteile 2a, 2b sind Teil einer Dichtungsanordnung 2c und durch einen Spalt 5 voneinander beabstandet. Die Bauteile 2a, 2b können jeweils zwei benachbarte Leitschaufeln 12, insbesondere Leitschaufelplatten 16 sowie zwei einander benachbarte Wandbauteile 13 sein. In den Bauteilen 2a, 2b ist jeweils in Umfangsrichtung eine Bauteilnut 3a bzw. 3b vorgesehen. In die Bauteilnuten 3a, 3b greift den Spalt 5 dichtend ein Dichtelement 1 ein. Das Dichtelement 1 ist entlang einer Hauptlinie 21 gerichtet und weist in dem dargestellten Querschnitt senkrecht zur Hauptlinie 21 ein erstes Ende 6a, ein zweites Ende 6b und einen dazwischen liegenden Mittelbereich 10 auf. Der Mittelbereich 10 weist zu dem Kühlgasbereich 8 hingerichtet eine Mehrzahl von Riffelnuten 7 auf, wobei zwischen benachbarten Riffelnuten 7 jeweils ein Dichtungszahn 20 gebildet ist, wodurch der Mittelbereich 10 einseitig geriffelt ist. Die Dichtungszähne 20 sind an einem Zahnträgerabschnitt 18 des Dichtelements 1 angeordnet. Jede Riffelnut 7 und jeder Dichtungszahn 20 erstreckt sich parallel zur Hauptlinie 21 und senkrecht zu einer ggf. möglichen Leckageströmung.

Die Bauteilnuten 3a, 3b weisen jeweils einander parallel gegenüberliegende Nutseitenwände 9a, 9b auf. Da in der Regel der Druck des Kühlgases höher ist als der Druck des Heißgases im heißgasführenden Bereich 11, liegt das Dichtelement 1 mit seiner glatten Oberfläche an den Seitenwänden 9a der Bauteilnuten 3a, 3b auf, so dass die Dichtungszähne 20 von einer mechanischen Belastung eher entlastet sind.

Die beiden Nutseitenwände 9a, 9b einer Bauteilnut 3a, 3b liegen dabei in einem Abstand gegenüber, welche auch als Nutbreite B bezeichnet wird. Die Nutbreite B ist maximal das 1,1-fache größer als die Gesamtdicke D des Dichtelements 1. Gemäß einer ersten Ausgestaltung beträgt die Nutbreite 2,5 mm und die Dichtelementdicke 2,4 mm.

Die Dichtungszähne 20 weisen eine Höhe H auf, welche zwischen 10% und 40% der Dichtelementdicke beträgt, beispielsweise 0,5 mm. Dies entspricht in etwa 20,8% der o.g. Dichtelementdicke. Gleichzeitig weisen die Dichtungszähne 20 aufgrund ihrer annähernd rechteckigen Querschnittskontur eine entlang ihrer Höhe nahezu unveränderte Zahnbreite Z auf. Diese liegt in der Größenordnung von etwa 0,1 bis 0,2 mm. Die Gesamtdicke D des Dichtelements 1 und die Nutbreite B sind derart aufeinander abgestimmt, dass - bei planer Anlage der glatten Seite des Dichtelements 1 an der Nutseitenwand 9a sich ein Spalt S zwischen der Dichtungszahnspitze und der anderen Seitenwand 9b der Bauteilnut 3a, 3b ausbildet - der mittlere Abstand T zwischen zwei unmittelbar benachbarten Dichtungszähnen 20 mindestens das 5-fache des Spalts S beträgt. Nach Möglichkeit sollte auch der mittlere Abstand T im Wesentlichen das 1,6-fache der Zahnhöhe H betragen. Gemäß der ersten Ausgestaltung der Dichtungsanordnung 2c weist der Spalt S ein Maß von 0,1 mm auf und der Abstand T ein Maß von 0,8 mm.

Selbstverständlich müssen die Dichtungszähne 20 nicht senkrecht vom Zahnträgerabschnitt 18 abstehen. Sie können auch, wie in FIG 2 rechts dargestellt und mit dem Bezugszeichen 22 beschriftet, geringfügig gegenüber einer zum Zahnträgerabschnitt 18 Senkrechten 23 geneigt sein.

Ingesamt betrifft die Erfindung ein Dichtelement 1 zur Dichtung eines Spalts 5 zwischen zwei Bauteilen 2a, 2b, insbesondere einer Dichtungsanordnung 2c einer Gasturbinenanlage, welches entlang einer Hauptlinie 21 gestreckt ist und einen konturierten Querschnitt in einem geriffelten Mittelbereich 10 hat. Im Querschnitt ist das Dichtelement 1 entlang der Hauptlinie 21 gerichtet und in einer Richtung im Wesentlichen orthogonal zur Hauptlinie 21 deformierbar. Um ein verschleißbeständiges, langlebiges Dichtelement 1 mit einer besonders effizienten Sperrwirkung bereitzustellen, wird vorgeschlagen, dass die Dichtungszähne 20 der Riffelung eine rechteckige Querschnittkontur aufweisen und deren Zahnhöhe H zwischen 10% und 40% der zur Zahnhöhe H parallel erfassbaren Dichtelementdicke D beträgt. Eine ebenso effiziente Abdichtung kann erreicht werden, wenn anstelle dessen die Dichtungszähne 20 neben der rechteckigen Querschnittskontur einen Abstand T zueinander aufweisen, der ca. das 1,6-fache der mittleren Zahnhöhe H der betreffenden Dichtungszähne 20 beträgt. Die mittlere Zahnhöhe H entspricht dem arithmetischen Mittel der betrachteten Zahnhöhen.

## Patentansprüche

1. Plattenförmiges Dichtelement (1)
zur Dichtung eines Spalts (5) zwischen zwei mechanisch oder thermisch gegeneinander beweglichen Bauteilen (2a, 2b), welche jeweils eine einander gegenüberliegende Bauteilnut (3a, 3b) zur Aufnahme des Dichtelements (1) aufweisen,
welches entlang einer Hauptlinie (21) gerichtet ist und in einem im Wesentlichen zur Hauptlinie (21) senkrechten Querschnitt einen zwischen einem ersten Ende (6a) und einem zweiten Ende (6b) angeordneten Mittelbereich (10) mit einer ersten Oberflache aufweist, die gezahnt ist,
**dadurch gekennzeichnet, dass**
die Dichtungszähne (20) eine nahezu rechteckige Querschnittskontur aufweisen und deren Zahnhöhe (H) zwischen 10% und 40% der Dicke (D) des Dichtelements (1) beträgt.

2. Dichtelement (1) nach Anspruch 1,
bei dem der Abstand (T) zwischen zwei einander unmittelbar benachbarten Dichtungszähnen (20) ca. das 1,6-fache der mittleren Zahnhöhe (H) beider Dichtungszähne (20) beträgt.

3. Dichtelement (1) nach dem Oberbegriff von Anspruch 1, **dadurch gekennzeichnet, dass**
die Dichtungszähne (20) eine nahezu rechteckige Querschnittskontur aufweisen und der Abstand (T) zwischen zwei einander unmittelbar benachbarten Dichtungszähnen (20) ca. das 1,6-fache der mittleren Zahnhöhe (H) beider Dichtungszähne (20) beträgt.

4. Dichtelement (1) nach Anspruch 1, 2 oder 3,
dessen Dichtelementdicke zwischen 1,0 mm und 4,0 mm beträgt und
dessen Zahnhöhe (H) zwischen 0,1 mm und 1,6 mm, insbesondere zwischen 0,3 mm und 0,7 mm beträgt.

5. Dichtungsanordnung (2c),
umfassend zwei mechanisch oder thermisch gegeneinander bewegliche Bauteile (2a, 2b), die spaltbildend einander gegenüberliegen,
wobei in den einander gegenüberliegenden Wänden der Bauteile (2a, 2b) jeweils eine Bauteilnut (3a, 3b) vorgesehen ist, in denen zur Dichtung des Spalts (5) ein Dichtelement (1) nach dem Oberbegriff des Anspruchs 1 angeordnet ist, **dadurch gekennzeichnet, dass**
die Bauteilnuten (3a, 3b) eine Nutbreite (B) aufweisen, welche größer ist als dazu parallel erfassbare Dichtelementdicke (D) und
dass der Abstand (T) zwischen zwei einander unmittelbar benachbarten Dichtungszähnen (20) des Dichtelements (1) mindestens das 5-fache der maximal zu erwartenden Differenz zwischen der Nutbreite (B) und der Dichtelementdicke (D) beträgt.

6. Dichtungsanordnung (2c) nach Anspruch 5,
bei der - unter Berücksichtigung von Bauteiltoleranzen - die Nutbreite (B) und Dichtelementdicke (D) derart aufeinander abgestimmt sind, dass das Dichtelement (1) mit einer Übergangspassung mit gezieltem Übermaß in der Bauteilnut eingebaut ist.

7. Dichtungsanordnung (2c) nach Anspruch 6,
bei der die Nutmindestbreite bis zu 0,05 mm kleiner ist als die dazu parallel erfassbare Dichtelement-Maximaldicke und bei der der Abstand (T) zwischen zwei einander benachbarten Dichtungszähnen (20) des Dichtelements (1) das 5 bis 10-fache der Differenz zwischen maximaler Nutbreite und minimaler Dichtelementdicke ist.

8. Dichtungsanordnung (2c) nach einem der Ansprüche 5, 6 oder 7,
bei der die Nutbreite (B) maximal um das 1,1-fache der Dichtelementdicke (D) größer ist.

9. Dichtungsanordnung (2c) nach einem der Ansprüche 5 bis 8,
bei der die Dichtungszähne (20) eine Verformbarkeit aufweisen, so dass eine einfachere Montage der Dichtelemente (1) auch bei Übermaß gewährleistet werden kann.

10. Dichtungsanordnung (2c) nach einem der Ansprüche 5 bis 9,
bei der die Dichtungszähne (20) eine Nachgiebigkeit aufweisen, so dass eine vorteilhafte Verwendbarkeit der Dichtelemente (1) auch zur Abdichtung der Bauteile (2a, 2b) mit erheblichen Versätzen und Verformungen in Betriebszustand möglich ist.
